# EUROPÄISCHE PATENTSCHRIFT

(11) **EP 2 622 401 B1**
(45) Veröffentlichungstag und Bekanntmachung des Hinweises auf die Patenterteilung: **29.07.2020**
(21) Anmeldenummer: 11764482.3
(22) Anmeldetag: 29.09.2011
(51) Int. Cl.: G02B 21/00, G02B 27/28, G02F 1/01

(54) **LASER-SCANNING-MIKROSKOP MIT UMSCHALTBARER BETRIEBSWEISE**
LASER SCANNING MICROSCOPE WITH SWITCHABLE OPERATING MODE
MICROSCOPE À BALAYAGE LASER À MODE DE FONCTIONNEMENT COMMUTABLE

(30) Priorität: 01.10.2010 DE 102010047353
(43) Veröffentlichungstag der Anmeldung: 07.08.2013
(73) Patentinhaber: Carl Zeiss Microscopy GmbH, 07745 Jena (DE)
(72) Erfinder: ANHUT, Tiemo, 07745 Jena (DE); KALKBRENNER, Thomas, 07743 Jena (DE); SCHWEDT, Daniel, 07745 Jena (DE)
(74) Vertreter: Loritz, Rainer
(86) Internationale Anmeldenummer: PCT/EP2011/004873
(87) Internationale Veröffentlichungsnummer: WO 2012/041502

(56) Entgegenhaltungen:
- EP-A1- 1 720 052
- US-A1- 2003 030 901
- US-A1- 2008 111 981
- US-A1- 2010 193 481

## Beschreibung

### Grundproblem:

Bei der Mikroskopie an biologischen Proben mit wechselnden Anforderungen; so z.B. Mikroskopie in stark streuenden Medien mit begrenzter Eindringtiefe und/oder Lebendzell-Mikroskopie zur Beobachtung dynamischer Prozesse oder mikroskopische Analyse von Diffusionsprozessen gibt es hohe Anforderungen an die Flexibilität bezüglich der Eindringtiefe in streuenden Medien, der Probenschonung (Bleichen, Phototoxizität), Bildaufnahmegeschwindigkeit und der ROI (regions of interest) -Manipulation

### Stand der Technik:

### Referenzen

[1] Chen et al., Opt. Express 16, 18764 (2008)
[2] Wong et al., Appl. Opt. 48, 3237 (2009)
[3] Sueda et al., Opt. Express 12, 3548 (2004)
[4] WO2009008838
[5] EP500717 Zweiphotonenmikroskopie

### 2-Photonen-Mikroskopie (EP500717B2):

Nachteile sind ein sehr teures Lasersystem, die Einschränkung in Wahl der Farbstoffe, die Probenbelastung.

FRAP (Fluorescence Recovery After Photobleaching):
Hier wird ein bestimmter Probenbereich gezielt ausgeblichen und dessen Erholungsverhalten im Anschluss zeitlich detektiert. Hierzu ist ein Einzelspotmodus (single spot) erforderlich, um eine ausgewählte Region der Probe gezielt und mit hoher Intensität zu bestrahlen, bis die Fluoreszenz ausgeblichen ist (s.a. DE 19829981A1). Deren Wiederherstellung durch Diffusionsprozesse wird sodann mit möglichst schneller Bildgebung gemessen. Hierzu ist eine schnelle Umschaltung zwischen Bleich- und Bildgebungsvorgang vorteilhaft, da der Gradient der Wiederherstellung unmittelbar nach Ende des Bleichens am größten ist.

### Focal Modulation Microscopy (FMM) wie publiziert [1,2, 4]

Bei FMM wird der halbe Anregungslaserstrahl (im Durchmesser) phasenmoduliert. Bei Fokussierung durch ein Mikroskopobjektiv führt diese halbseitige Phasenmodulation zu einer Intensitätsmodulation im Fokalvolumen. Diese Intensitätsmodulation kann nach einem onfokalen Pinhole beispielsweise durch Lock-In-Detektion erfasst werden. Der Vorteil des Verfahrens besteht darin, dass nur die ballistischen, also ungestreuten Photonen zu diesem Modulationssignal insofern beitragen, als sie eine Modulation der Lichtverteilung im Fokus erzeugen, die dann zu einer zeitlichen Intensitätsmodulation der Signalphotonen führt; die z.B. in stark streuenden Medien mehrfach gestreuten Photonen verlieren die feste Phasenbeziehung und tragen nicht zur zeitabhängigen Interferenzstruktur im Fokus und damit nicht zum Lock-ln-demodulierten Signal bei. Dadurch wird der Hintergrund durch gestreutes Licht stark reduziert und die Tiefe, in welcher mit einem Laser-Konfokalmikroskop eine relativ genaue Abbildung der Probe möglich ist, erhöht.

Bislang werden zur Phasenmodulation des halben Laserstrahls mechanische Ansätze verwendet. In [1] wird der Laserstrahl auf einen geteilten Spiegel gelenkt, dessen eine Hälfte über ein Piezoelement relativ zur anderen Hälfte bewegt wird.
In [2] wird der Strahl zur Hälfte durch eine Glasscheibe geleitet, die sich auf einem Galvanometer-Scanner befindet. Durch Rotation dieser Scheibe wird die Phase der einen Strahlhälfte relativ zur anderen moduliert.

Das Grundproblem aller mechanischen Ansätze ist die niedrige Modulationsrate, die durch die mechanische Resonanzfrequenz der eingesetzten Stellelemente beschränkt wird (5-20 kHz für [1] und [2]).
Da für das Lock-In-Detektionsverfahren eine Mindestanzahl von Modulationsperioden pro Pixelverweilzeit erforderlich ist, wird damit die Bildaufnahmerate stark eingeschränkt. FMM kann vorteilhaft für die Laserscanning-Mikroskopie (LSM) in stark streuenden Medien eingesetzt werden und bietet eine Alternative zur Multiphotonenmikroskopie [5]. Die FMM-Lösungen wie bislang bekannt sind dediziert für den für die Eindringtiefe vorteilhaften Modulationsbetrieb ausgelegt.
Für ein flexibel einsetzbares LSM ergeben sich jedoch insbesondere für den Einsatz in der Lebendzell-Forschung noch weitere Anforderungen, die zum Teil mit den gängigen Formen der LSM und insbesondere der Multiphotonenmikroskopie nur schwer zu vereinbaren sind. Hier sind als Kriterien vor allem Aufnahmegeschwindigkeit (Beobachtung dynamischer Prozesse) und Probenbelastung (Phototoxizität, Bleichen bei Langzeitbeobachtung dynamischer Prozesse) zu nennen.

Eine Erhöhung der Bildaufnahmegeschwindigkeit im LSM zur Beobachtung dynamischer Prozesse kann grundsätzlich durch schnelleres Scannen, z.B. mit einem Resonanzscanner, erreicht werden. Dies ist jedoch schwer mit der Forderung nach Probenschonung zu vereinbaren, da zur Generierung eines ausreichenden Fluoreszenzsignals innerhalb der kürzeren Pixelverweilzeit höhere Intensitäten erforderlich sind.
Eine andere Möglichkeit, die Bildaufnahmegeschwindigkeit zu erhöhen und/oder die Probenbelastung zu verringern, besteht im Rastern mehrerer räumlich verteilter Foki gleichzeitig (Multispot LSM) (DE19904592 A1, US 6028306). Eine Möglichkeit zur Umschaltung zwischen Ein- und Zwei-Photonen-Modi mittels eines elektrooptischen Modulators und eines Polarisationsstrahlteilers ist aus der US 2003/0030901 A1 bekannt.

### Erfindung

Die Erfindung wird durch die Merkmale der unabhängigen Patentansprüche charakterisiert.
Bevorzugte Weiterbildungen sind Gegenstand der abhängigen Ansprüche.

Die erfinderische angegebene Lösung bezieht sich sowohl auf eine konkrete FRAP-Problemstellung als auch auf das schnelle Schalten zwischen alternativen Bildgebungsmodi, für welche die schnelle Umschaltung zweier Strahlwege erforderlich ist, wobei einer der Strahlwege eine Multispotgenerierung enthalten kann aber nicht enthalten muss.

Es folgt nun eine schematische Beschreibung verschiedener vorteilhafter Ausführungen zur Erfindung:

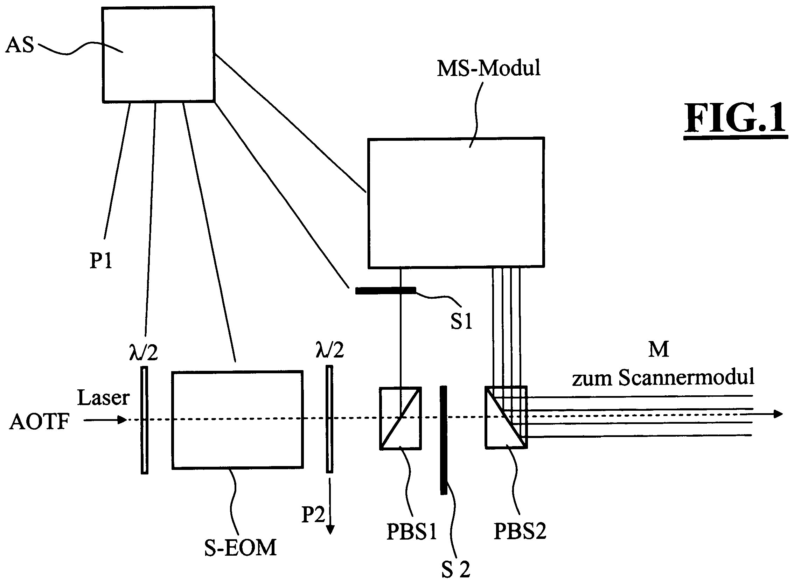

Abbildung 1 zeigt eine Anordnung zur Strahlschaltung und -modulation für den flexiblen Multimode-Ansatz eines LSM. Mit einem in den Abbildungen und im Text näher erläuterten segmentierten EOM (s-EOM) lässt sich ein Multimode-LSM z.B. betreiben als
- Einzelspot-LSM
- Multispot-LSM
- Einzelspot-FMM
- Multispot-FMM
- FRAP-System

und außerdem schnell zwischen diesen Betriebszuständen hin und her schalten.

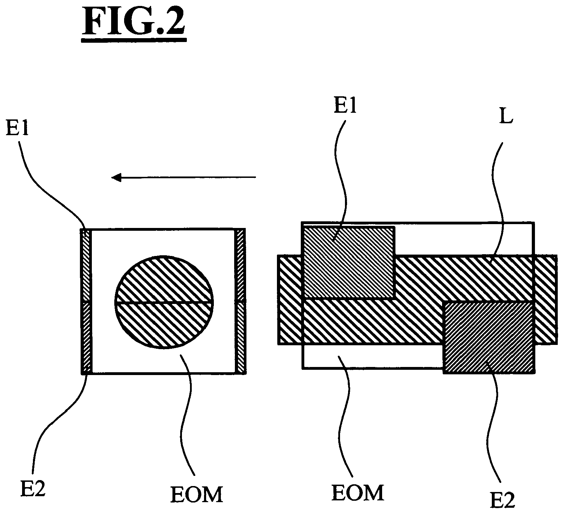

Im Strahlengang der Lichtquelle (Laser) ist ein elektrooptischer Modulator S- EOM vorgesehen, der vorteilhaft wie in Abb. 2 dargestellt angesteuert werden kann.

Dem S EOM vor- und nachgeschaltet sind λ /2 Platten P1 und P 2.

Der Platte P2 folgt ein Polarisationsstrahlenteiler PBS1 sowie in Durchgangsrichtung von PBS 1 ein weiterer Polarisationsstrahlenteiler PBS 2.

In Reflektionsrichtung von PBS 1 ist ein Lichtverschluß S1 sowie ein MS Modul zur Multispoterzeugung aus dem Laserstrahl vorgesehen, der über den Spiegel von PBS 2 wieder in Richtung des Mikroskops M mit einem Scanmodul eingekoppelt wird. Des Weiteren ist auch in Transmissionsrichtung zwischen beiden PBS eine vorteilhafte Anordnung eines zweiten Lichtverschlusses S2 möglich.

Die Platten P1 und P2 sind über eine Ansteuereinheit AS drehbar (P1, P2) ausgebildet, wobei P2 zusätzlich ausschwenkbar ausgeführt sein kann.

Die Verschlüsse und der S- EOM sind ebenfalls mit der Ansteuereinheit AS verbunden, die die Umschaltung zwischen verschiedenen Betriebsarten steuert.

Der Verschluss S1 dient insbesondere im Einzelspot-(LSM, FMM)-Modus dazu, vollständig zu vermeiden, dass Licht über das MS Modul und PBS 2 zur Probe gelangt, wodurch schwache Geisterbilder erzeugt würden. Der Verschluss S2 dient der Vermeidung der Überbetonung eines der Teilstrahlen im Mehrspotbetrieb durch Durchbluten von fehlpolarisierten Laserlicht durch die beiden PBS, was ungleichmäßige Bildhelligkeiten mit harten Übergängen (Streifen) verursachen würde.

In einer Tabelle T1 sind beispielhaft Betriebsmodi der Einzelelemente für die erwähnten Betriebsweisen eines Laser- Scanning- Mikroskops aufgeführt.

**T1**

| Betriebsart | P1 (Winkel zu Laserpolarisatio n) | E1 (V) | E2 (V) | P2 (Winkel zu P1) | Shutter1 | Shutter2 |
|---|---|---|---|---|---|---|
| 1. Einzelspot-LSM | 0° | 0V | 0V | 45° | geschlos sen | offen |
| 2. Multispot-LSM | 0° | 0V | 0V | 0° | offen | geschlos sen |
| 3. Einzelspot-FMM*) | 22.5° | moduliert | 0V | 45° | geschlos sen | offen |
| 4. Multispot-FMM*) | 22.5° | moduliert | 0V | 0° | offen | geschlos sen |
| 5. FRAP-Bleichen | 0° | HalbwellenS pannung | Halbwellens pannung | 0° | offen | offen |

Mit Halbwellenspannung ist die Betriebsspannung des EOM für die verwendete Laserwellenlänge gemeint, die eine Gangverzögerung des außerordentlich polarisierten Anteils des Laserlichtes um eine halbe Wellenlänge verursacht und demzufolge ein Umklappen der Polarisation um 90 Grad.
Die Null Grad und 22,5 Grad bei P1 beziehen sich auf den Winkel zwischen einer angenommenen linearen Orientierung der Polarisation des einfallenden Laserstrahls, die er beispielsweise durch einen vorgeordneten AOTF erfährt und die beispielsweise senkrecht ausgerichtet sein kann, und der außerordentlichen Kristallachse der Halbwellenplatte.

Im Betrieb der Fokalmodulation (3 und 4) ist es ebenfalls denkbar, dass das Elektrode E2 moduliert wird anstatt E1.
Für die einzelnen Betriebsarten nach Tabelle T1 ergibt sich also folgender Strahlverlauf der Laserstrahlung über die in Fig.1 dargestellten Elemente:
1. Über P1, EOM, P2, PBS 1, S2, PBS2 in Richtung M
2. Über P1, EOM, P2, PBS1, S1, MS, PBS2, M
3. Über P1, EOM, P2, PBS1, S2, PBS2, M
4. Über P1, EOM, P2, PBS1, S1, MS, PBS2, M
5.Über P1, EOM, P2, PBS1, S2, PBS 2, M

### Abb.2: Elektro-Optischer Modulator (EOM):

Erfindungsgemäß werden EOM im FMM Modus zur besonders schnellen, nichtmechanischen Phasenmodulation mindestens eines Teils, vorzugsweise der Hälfte des Anregungsstrahls eingesetzt.
Sie werden durch gegenpolige Ansteuerung von Teilen des EOM oder mehrerer EOM unterschiedlich (gegenphasig) moduliert.
Bei unterschiedlich angesteuerten Teilen eines EOM kann durch fachmännisch übliche Isolierschichten eine gegenseitige Beeinflussung der segmentierten Elektroden vermieden werden.

Elektro-Optische Modulatoren nutzen den Pockels-Effekt in einem doppelbrechenden Kristall aus, bei dem durch Anlegen einer Spannung an den Kristall dessen außerordentlicher Brechungsindex verändert wird. Dies lässt sich nutzen, um die Polarisation oder Phase des durchlaufenden Laserlichts zu manipulieren. Der Pockelseffekt erfolgt fast instantan, wodurch die Modulation abhängig von Art und Größe des Kristalls sehr schnell erfolgen (bis zu einige 10 MHz).
Im Folgenden werden Ausführungen beschrieben, wie sich dies vorteilhaft für die FMM Mikroskopie ausnutzen lässt:
Ein EOM mit gegenläufigen Feldern E1, E2 , erzeugt durch nebeneinander oder versetzt gegenüberliegende Elektroden, ist in Fig. 2 schematisch dargestellt.

Ein grundsätzlicher wichtiger Vorteil aller EOM-basierten Lösungen ist die größtmögliche Modulationsrate von einigen 10 MHz.

Der EOM befindet sich in Anlehnung an [1,2] im Beleuchtungsstrahlengang, vorteilhaft in einem aufgeweiteten (kollimierten) Strahlabschnitt.

Durch die Größe der Strahlaufweitung kann eine Anpassung des Strahlquerschnitts an die Kristallgröße erfolgen.

In Abb. 2 links werden zwei obere und untere Strahlhälften mit im oberen und im unteren Teil gegenphasig gepolten Elektroden unterschiedlich moduliert.
Die modulierten Abschnitte können, müssen aber am Laserstrahl nicht übereinander sitzen.
Im rechten Teil in Abb.2 ist eine Seitenansicht (in Pfeilrichtung im linken Teil) schematisch dargestellt, bei der die angesteuerten Abschnitte vorteilhaft gegeneinander seitenversetzt sind.
Das kann zur Vermeidung von Streufeldern (bei EOM sind hohe Spannungen erforderlich) vorteilhaft sein.

Es kann eine gegenphasig gepolte Ausführung vorteilhaft sein, beispielsweise wenn der Kristall nicht modifiziert werden soll, aber Übersprecheffekte von einer Seite auf die andere vermieden werden sollen. Durch die gegenphasige Ansteuerung wird außerdem vorteilhaft der Hubabstand (Abstand der gegenläufigen Amplituden) verdoppelt im Vergleich zur einphasigen Ansteuerung. Bei einem gewünschten Phasenunterschied (Hub) könnte dadurch vorteilhaft auch der Kristall verkürzt werden (verkürzte Lauflänge). Durch die versetzte Anordnung der angesteuerten Gebiete des EOM ist außerdem eine Überlappung der beiden Strahlgebiete möglich (über die Hälfte hinaus).

### Einsatz zur Multimode- Umschaltung

Wie im Weiteren verdeutlicht wird, kann der EOM überraschend und vorteilhaft in einem weiteren Betriebsmodus in derselben Anordnung zum Betrieb in einer Einzelspotvariante , vorzugsweise für FRAP, eingesetzt werden.

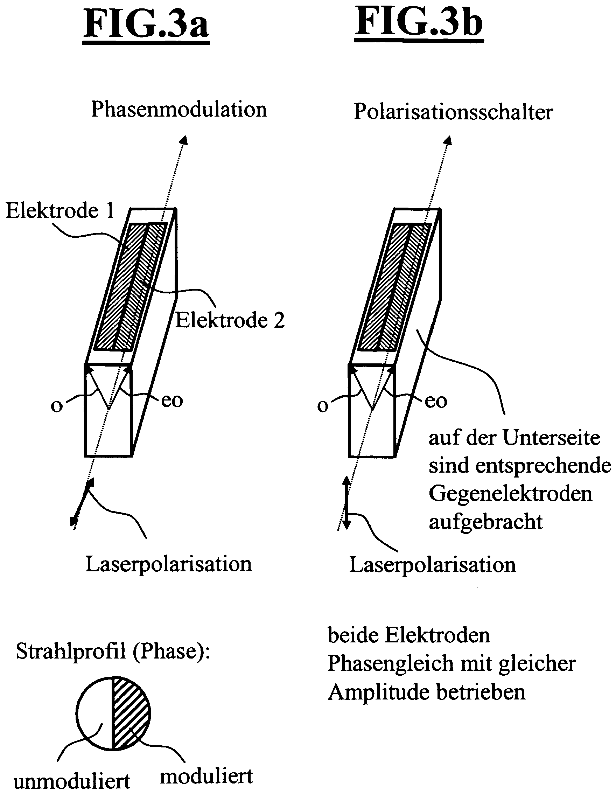

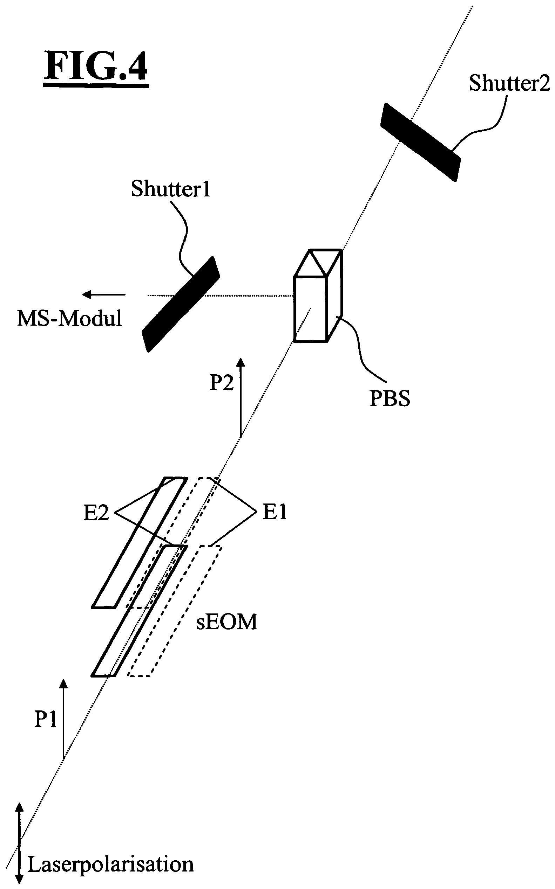

Abbildung 3 zeigt perspektivisch den Elektro-Optischen Modulator für die in Abb. 1 gezeigte Anordnung.

Die Elektroden 1 und 2 zur Erzeugung des elektrischen Wechselfeldes haben auf der Unterseite des Kristalls (aus Gründen der Übersichtlichkeit hier nicht gezeigt) ihre entsprechenden Gegenelektroden.

Es handelt sich um einen EOM mit segmentierten Elektroden, dessen ordentliche und außerordentliche Kristallachsen senkrecht zueinander und senkrecht zur optischen Achse und wie in der Abbildung skizziert unter 45° zur Achse des elektrischen Feldes orientiert sind. Dies hat auf linear polarisiertes Laserlicht folgende Wirkung:
- Laserpolarisation entlang der außerordentlichen Kristallachse => Das Laserlicht erfährt eine Verzögerung (Laufzeitverlängerung) gemäß der an den Elektroden anliegenden Feldstärken aufgrund des Pockelseffektes
- Laserpolarisation unter 45° zu den (außer)ordentlichen Kristallachsen => Licht wird gleichmäßig auf die (außer)ordentlichen Ausbreitungsrichtungen aufgeteilt. Je nach an den Elektroden anliegenden Spannungen (Verzögerung des außerordentlich propagierenden Anteils) stellt sich bei der Überlagerung beider Anteile nach Austritt aus dem Kristall ein neuer Polarisationszustand ein, bspw. linear um 90° gedreht bei halbwelliger Verzögerung oder zirkular bei viertelwelliger Verzögerung

Für den Betriebsmodus FMM (3a) wird die Laserpolarisation entlang der schnellen Kristallachse des EOM (eo, extraordinary axis) eingestrahlt; diese Orientierung kann durch die drehbar ausgebildete erste lambda /2-Platte P1 vor dem S-EOM in Abbildung 1 eingestellt werden. Entsprechend erfolgt keine Polarisationsdrehung, wohl aber eine Modulation der Phase des halben Strahls oder eine gegenphasige Modulation beider Hälften im EOM wie für FMM benötigt.
Durch Drehung der zweiten lambda /2-Platte P2 (nach dem S-EOM) kann im Zusammenhang mit PBS 1 eingestellt werden, ob die Laserleistung über das Multispot-Modul geleitet wird (Multispot-FMM) oder direkt in Richtung Scankopf/Mikroskop (EinzelSpot FMM).

Wird nun die erste lambda /2-Platte P1 vor S-EOM so gedreht, dass die Laserpolarisation mit den (außer)ordentlichen Kristallachsen einen Winkel von 45° einschließt, (Abb. 3b) und werden die segmentierten Elektroden phasengleich angesteuert ,so dass kein Phasenunterschied zwischen den beiden Strahlhälften vorliegt, so funktioniert der EOM als Polarisationsschalter, der die Polarisation sehr schnell z.B. zwischen horizontal und vertikal, beispielsweise über eine Ansteuerung mit einer Rechteckspannung, schaltet, d.h. festlegt ob Licht durch den PBS transmittiert oder an diesem reflektiert wird, wobei für diesen Betriebsmodus die zweite lambda /2-Platte aus dem Strahlengang gebracht wird oder so orientiert wird, dass ihre schnelle Achse parallel zu einer der Vorzugsachsen des nachfolgenden PBS liegt. In diesem Betriebsmodus kann das System vorteilhaft für FRAP eingesetzt werden: das schnelle Schalten erlaubt im Zusammenhang mit dem Scanner das gezielte Bleichen beliebiger ROIs (Region Of Interest, DE 19829981A1).
Zudem ist die für Live Cell Imaging attraktive Kombination Multispot-LSM zur schnellen Beobachtung und Single- Spot Manipulation vorteilhaft möglich: nach einem Manipulationsereignis im geraden Durchgang (Tabelle T1 Zeile 5) kann direkt eine schnelle Abfolge von Beobachtungs-Scans im Multispot-LSM Modus erfolgen (Tabelle T1 Zeile 2); dadurch kann das durch die Manipulation ausgelöste dynamische Ereignis (z.B. uncaging von Farbstoffen) mit höherer Zeitauflösung beobachtet werden.

Die Erfindung ist nicht an die dargestellten Abläufe gebunden.
Vielmehr kann im Rahmen fachmännischen Handelns die Erfindung zur Umschaltung unterschiedlicher verschiedener Betriebsarten genutzt werden, die paarweise oder in mehrfacher Kombination vorteilhaft verwendet werden können.

## Patentansprüche

1. Laser-Scanning-Mikroskop (M), das zwischen verschiedenen Betriebsarten umschaltbar ist, mit einem Laser und einem Beleuchtungsstrahlengang, wobei es zur Umschaltung der Betriebsarten im Beleuchtungsstrahlengang in einem ersten Strahlengang eine erste drehbare lambda-halbe-Platte (P1), einen elektrooptischen Modulator (sEOM), eine zweite drehbare lambda-halbe-Platte (P2) und einen ersten Polarisationsstrahlteiler (PBS, PBS1) enthält, wobei die erste lambda-halbe-Platte (P1) dem elektrooptischen Modulator (sEOM) vorgeordnet und die zweite lambda-halbe-Platte (P2) dem elektrooptischen Modulator (sEOM) nachgeordnet sind und der erste Polarisationsstrahlteiler (PBS, PBS1) zur Erzeugung eines zweiten Strahlengangs der zweiten lambda-halbe-Platte (P2) folgt, wobei der elektrooptische Modulator (sEOM) segmentierte Elektroden (1, 2) aufweist und wobei die Umschaltung zwischen den Betriebsarten durch die Einstellung der Drehung der ersten lambda-halbe-Platte (P1), die Einstellung der Drehung der zweiten lambda-halbe-Platte (P2) und durch die Ansteuerung der segmentierten Elektroden des elektrooptischen Modulators (sEOM) erfolgt.

2. Laser-Scanning-Mikroskop nach Anspruch 1, wobei über einen dem ersten Polarisationsstrahlteiler (PBS1) in Lichtrichtung nachgeordneten zweiten Polarisationsstrahlteiler (PBS2) eine Vereinigung des ersten und zweiten Strahlengangs erfolgt.

3. Laser-Scanning-Mikroskop nach Anspruch 1 oder 2, wobei der elektrooptische Modulator (sEOM) mindestens in zwei Betriebszuständen (B1, B2) einsetzbar ist, wobei der erste Betriebszustand die Schaltung der Polarisation ist und der zweite Betriebszustand die unterschiedliche Modulierung unterschiedlicher Bereiche des elektrooptischen Modulators (sEOM) zur Erzeugung einer Fokusmodulation ist.

4. Laser-Scanning-Mikroskop nach mindestens einem der vorangehenden Ansprüche, wobei im zweiten Strahlengang eine Strahlaufspaltung in mindestens zwei Teilstrahlen zur Multispoterzeugung vorgesehen ist.

5. Laser-Scanning-Mikroskop nach einem der Ansprüche 3 oder 4, wobei im zweiten Strahlengang, wenn abhängig vom Anspruch 4, vor der Strahlaufspaltung und/oder im ersten Strahlengang zwischen dem ersten und zweiten Polarisationsstrahlteiler (PBS2) ein ansteuerbarer Lichtverschluss (S2) vorgesehen ist.

6. Verfahren zur Laser-Scanning-Mikroskopie mit einem Laser-Scanning-Mikroskop (M), wobei das Laser-Scanning-Mikroskop (M) nach einem der vorangehenden Ansprüche ausgebildet ist, wobei eine oder mehrere der folgenden Betriebsarten des Laser-Scanning-Mikroskops (M) eingestellt werden:
- Einzelspot-Laser-Scanning-Mikroskop
- Multispot-Laser-Scanning-Mikroskop
- Einzelspot-Fokusmodulation
- Multispot-Fokusmodulation
- FRAP-System.

7. Verfahren nach Anspruch 6, wobei eine Umschaltung der Betriebsarten derart erfolgt, dass nach einem Bleichvorgang oder einer anderen, vorzugsweise Single-Spot, Manipulation eines Probengebietes eine unmittelbare Umschaltung auf einen Multispotmodus des Laser-Scanning-Mikroskops (M) erfolgt.

## Claims

1. Laser scanning microscope (M), which is switchable between various types of operation, having a laser and an illumination beam path, wherein said microscope contains, in a first beam path, a first rotatable half-wave plate (P1), an electro-optic modulator (sEOM), a second rotatable half-wave plate (P2) and a first polarizing beam splitter (PBS, PBS1), for switching the types of operation in the illumination beam path, wherein the first half-wave plate (P1) is arranged upstream of the electro-optic modulator (sEOM) and the second half-wave plate (P2) is arranged downstream of the electro-optic modulator (sEOM) and the first polarizing beam splitter (PBS, PBS1) for generating a second beam path follows the second half-wave plate (P2), wherein the electro-optic modulator (sEOM) has segmented electrodes (1, 2) and wherein the switching between the types of operation takes place by means of setting the rotation of the first half-wave plate (P1), by means of setting the rotation of the second half-wave plate (P2) and by means of actuating the segmented electrodes of the electro-optic modulator (sEOM).

2. Laser scanning microscope according to Claim 1, wherein the first and second beam path are combined by way of a second polarizing beam splitter (PBS2), arranged downstream of the first polarizing beam splitter (PBS1) in the light direction.

3. Laser scanning microscope according to Claim 1 or 2, wherein the electro-optic modulator (sEOM) is useable in at least two operating states (B1, B2), wherein the first operating state is switching the polarization and the second operating state is the different modulation of different regions of the electro-optic modulator (sEOM), for generating a focus modulation.

4. Laser scanning microscope according to at least one of the preceding claims, wherein, in the second beam path, a beam-splitting into at least two partial beams is provided, for multispot generation.

5. Laser scanning microscope according to either of Claims 3 and 4, wherein an actuatable light shutter (S2) is provided in the second beam path upstream of the beam-splitting, when dependent on Claim 4, and/or in the first beam path between the first and second polarizing beam splitter (PBS2).

6. Method for laser scanning microscopy with a laser scanning microscope (M), wherein the laser scanning microscope (M) is embodied according to any of the preceding claims,
wherein one or more of the following types of operation of the laser scanning microscope (M) are set:
- single-spot laser scanning microscope
- multispot laser scanning microscope
- single-spot focus modulation
- multispot focus modulation
- FRAP system.

7. Method according to Claim 6, wherein the types of operation are switched in such a way that after a bleaching process or another, preferably single-spot, manipulation of a sample region, an immediate switching to a multispot mode of the laser scanning microscope (M) occurs.

## Revendications

1. Microscope à balayage laser (M), qui peut être permuté entre différents modes de fonctionnement, comprenant un laser et un trajet de faisceau d'éclairage, celui-ci comprenant dans un premier trajet de faisceau, en vue de la permutation des modes de fonctionnement dans le trajet de faisceau d'éclairage, une première lame demi-onde (P1) rotative, un modulateur électrooptique (sEOM), une deuxième lame demi-onde (P2) rotative et un premier diviseur de faisceau de polarisation (PBS, PBS1), la première lame demi-onde (P1) étant placée avant le modulateur électrooptique (sEOM) et la deuxième lame demi-onde (P2) étant placée après le modulateur électrooptique (sEOM) et le premier diviseur de faisceau de polarisation (PBS, PBS1) suivant la deuxième lame demi-onde (P2) en vue de générer un deuxième trajet de faisceau, le modulateur électrooptique (sEOM) possédant des électrodes (1, 2) segmentées et la permutation entre les modes de fonctionnement s'effectuant par le réglage de la rotation de la première lame demi-onde (P1), le réglage de la rotation de la deuxième lame demi-onde (P2) et par la commande des électrodes segmentées du modulateur électrooptique (sEOM).

2. Microscope à balayage laser selon la revendication 1, une fusion du premier et du deuxième trajet de faisceau s'effectuant par le biais d'un deuxième diviseur de faisceau de polarisation (PBS2) placé en aval du premier diviseur de faisceau de polarisation (PBS1).

3. Microscope à balayage laser selon la revendication 1 ou 2, le modulateur électrooptique (sEOM) pouvant être utilisé dans au moins deux états opérationnels (B1, B2), le premier état opérationnel étant la commutation de la polarisation et le deuxième état opérationnel la modulation différente de différentes zones du modulateur électrooptique (sEOM) en vue de générer une modulation de la mise au point.

4. Microscope à balayage laser selon au moins l'une des revendications précédentes, un dédoublement des faisceaux en au moins deux faisceaux partiels en vue de générer des points multiples étant présent dans le deuxième trajet de faisceau.

5. Microscope à balayage laser selon l'une des revendications 3 et 4, un obturateur de lumière (S2) commandable se trouvant dans le deuxième trajet de faisceau, si dépendance à la revendication 4, avant le dédoublement des faisceaux et/ou dans le premier trajet de faisceau entre le premier et le deuxième diviseur de faisceau de polarisation (PBS2).

6. Procédé de microscopie à balayage laser avec un microscope à balayage laser (M), le microscope à balayage laser (M) étant configuré selon l'une des revendications précédentes,
un ou plusieurs des modes de fonctionnement suivants du microscope à balayage laser (M) étant réglés :
- microscope à balayage laser à point unique,
- microscope à balayage laser à points multiples,
- modulation focale à point unique
- modulation focale à points multiples
- système FRAP.

7. Procédé selon la revendication 6, une permutation des modes de fonctionnement étant effectuée de telle sorte qu'après une opération de décoloration ou une autre manipulation, de préférence à point unique, d'une région d'échantillon, une permutation immédiate sur un mode à points multiples du microscope à balayage laser (M) a lieu.
